Europäisches Patentamt

European Patent Office

Office européen des brevets

(19)

(11) EP 0 874 978 B1

(12) **EUROPÄISCHE PATENTSCHRIFT**

(45) Veröffentlichungstag und Bekanntmachung des Hinweises auf die Patenterteilung:
**09.06.1999  Patentblatt 1999/23**

(21) Anmeldenummer: 96942368.0

(22) Anmeldetag: 06.12.1996

(51) Int Cl.6: **G01H 11/08**, G01N 29/24

(86) Internationale Anmeldenummer:
**PCT/EP96/05463**

(87) Internationale Veröffentlichungsnummer:
**WO 97/26513 (24.07.1997 Gazette 1997/32)**

(54) **PIEZOELEKTRISCHER DRUCKWELLENSENSOR**

PRESSURE WAVE SENSOR

DETECTEUR D'ONDES DE PRESSION PIEZOELECTRIQUE

(84) Benannte Vertragsstaaten:
**AT BE CH DE FR GB LI**

(30) Priorität: **20.01.1996  DE 19602048**

(43) Veröffentlichungstag der Anmeldung:
**04.11.1998  Patentblatt 1998/45**

(73) Patentinhaber: **Forschungszentrum Karlsruhe GmbH**
**76133 Karlsruhe (DE)**

(72) Erfinder:
• **HAUSER, Wolfgang**
  **D-76297 Stutensee (DE)**
• **GÖTZ, Robert**
  **D-76773 Kuhardt (DE)**

(74) Vertreter: **Rückert, Friedrich, Dr.**
**Forschungszentrum Karlsruhe GmbH**
**Patente und Lizenzen**
**Weberstrasse 5**
**76133 Karlsruhe (DE)**

(56) Entgegenhaltungen:
**EP-A- 0 401 643          DE-A- 2 946 209**

• **PATENT ABSTRACTS OF JAPAN Bd. 015, Nr. 283 (M-1137) 18 Juli 1991 & JP,A,03 099 855 (BROTHER IND LTD) 25 April 1991**
• **TOPICS IN CURRENT CHEMISTRY, Bd. 157, 1990, HEIDELBERG, GERMANY, Seiten 131 - 179, XP000671339 J-I.KIM ET AL 'Laser-induced photoacoustic spectroscopy for the speciation of transuranic elements in natural aquatic systems'**

**Beschreibung**

Die Erfindung betrifft einen Druckwellensensor nach dem Oberbegriff des Patentanspruchs 1, wie er aus der EP-A-0401643 bekannt ist.

Bei der laserinduzierten Photoakustik-Spektroskopie wird eine optisch durchlässige Probe mit der zu spektroskopierenden Verbindung (z. B. in wäßriger Lösung) mit kurzzeitigen, repetierenden Lichtimpulsen hoher Intensität aus einer gepulsten Laserlichtquelle bestrahlt. Aufgrund der photothermischen Absorption und der damit verbundenen örtlichen Wärmeausdehnung werden Stoßwellen in der Meßprobe erzeugt. Ein an die Meßprobe angepreßter Druckwellensensor (piezokeramischer Detektor) wandelt die Druckwellen in ein Spannungssignal um. Sein zeitliches Verhalten entspricht im Idealfall dem einer gedämpften Schwingung und ist proportional zur Absorption in der Probe. Hierbei gilt

$$\text{Piezospannung } U = k \cdot (\beta \cdot v^2/c_p) \cdot \alpha \cdot I_0 \, ,$$

mit

| | |
|---|---|
| $\beta = \beta(T)$: | thermischer Ausdehnungskoeffizient der Meßprobe, |
| $v = v(T)$: | Schallgeschwindigkeit in der Meßprobe, |
| $cp = cp(T)$: | spezifische Wärme bei konstantem Druck, |
| $\alpha = \varepsilon \cdot c$: | Absorptionskoeffizient, |
| $\varepsilon$: | molarer Extinktionskoeffizient, |
| $c$: | Konzentration, |
| $I_0$: | Laserenergie. |

Zur Aufnahme von Absorptionsspektren wird nun die Wellenlänge eines schmalbandigen Anregungslasers (z. B. Nd: YAG-gepumpter Farbstofflaser) durchgestimmt und mit der zugehörigen Piezospannung aufgezeichnet.

Bei entsprechender experimenteller Auslegung werden mit dieser Methode Nachweisgrenzen erreicht (Signal/Rausch-Verhältnis S/N = 3), die etwa 2 Größenordnungen niedriger sind als bei der konventionellen hochauflösenden Absorptionsspektroskopie.

Aus J.I. Kim, R. Stumpe, R. Klenze, Laser-induced Photoacoustic Spectroscopy for the Speciation of Transuranic Elements in Natural Aquatic Systems, Topics in Current Chemistry, Vol. 157, Springer-Verlag Berlin, Heidelberg, 1990, p. 131 - 179 ist ein Druckwellensensor der e. g. Art bekannt.

Auf S. 148 - 155 werden verschiedene photoakustische Meßzellen beschrieben. Bei diesen Meßzellen befindet sich der Piezo-detektor aus Gründen der Abschirmung gegen elektromagnetische Einstrahlung in Metallgehäusen, die zur Schallübertragung an Quarzglas-Küvetten angekoppelt werden. Dies geschieht im allgemeinen durch Spiralfedern, die sich am Piezogehäuse bzw. an entsprechenden Halterungen abstützen oder durch das Eigengewicht der Meßprobe (Probe steht auf PZT-Detektor). Eine zusätzliche Verbesserung der Schallübertragung bewirkt eine zwischen PZT-Detektor und Detektorgehäuse bzw. zwischen Detektorgehäuse und Meßprobe eingebrachte Gel-artige Flüssigkeit. Diese photoakustischen Meßzellen haben folgende Nachteile:

Da keine entsprechende Optimierung der Schwingungssysteme (Piezodetektor, Gehäuse, Anpreßfedern) im Hinblick auf die zuvor genannten Eigenschaften (maximales Spannungssignal, Schwingung nur in Eigenfrequenz des Piezodetektors, keine Oberschwingungen) erfolgte, konnte nicht die maximal mögliche Signalamplitude genutzt werden. Desweiteren war die Interpretation der detektierten Piezosignale insbesondere bei niedrigen Probenkonzentrationen schwer.

Mit den beschriebenen Aufbauten konnten aufgrund der geometrischen Anordnung (z. B. Probenküvette stehend auf Detektor) bzw. durch die Verwendung von zusätzlichen Kontaktmitteln für die Schallübertragung nur unter Schwierigkeiten reproduzierbare Meßsignale erzielt werden. Desweiteren erforderte die Verwendung der Kontaktmittel zusätzliche Reinigungsschritte für die Probenküvetten, die höchsten optischen und chemischen Reinheitsanforderungen entsprechen müssen.

Für einen gut funktionierenden 2-Kanal Betrieb, d.h. zur Online-Untergrundsubtraktion (Subtraktion des LPAS-Signals des Lösungsmittels vom LPAS-Signal der Küvette) ist es erforderlich, daß beide Piezo-Detektoren bei gleicher Anregung identische Signale liefern. Dies war beim bisherigen Stand der Technik nur eingeschränkt möglich, da es nicht gelang gekapselte Detektoren mit identischen Signalen herzustellen.

Die genannten Einschränkungen bei der Anwendung der laserinduzierten Photoakustik-Spektroskopie erlauben es bisher nicht, daß dieses hochempfindliche optische Meßverfahren routinemäßig eingesetzt werden kann. Obwohl diese Methode wesentlich empfindlicher als die konventionelle Transmissionsspektroskopie ist, gibt es nur sehr wenige Anlagen dieser Art.

Aufgabe der Erfindung ist es, einen Druckwellensensor der e. g. Art derart auszugestalten, daß er eine höhere Nachweisempfindlichkeit aufweist.

Gelöst wird diese Aufgabe durch die Merkmale des Patentanspruchs 1. Die Unteransprüche beschreiben vorteilhafte Ausgestaltungen des Druckwellensensors und der Anspruch 6 nennt eine vorteilhafte Verwendung.

Da bei photoakustischen Messungen bei niedrigen Probenkonzentrationen die Spannungssignale, auch für höhere Laserenergien sehr klein sind, müssen sie mit rauscharmen Verstärkern (abgestimmt auf die Resonanzfrequenz des Druckwellensensors) bis auf meßbare Signalgröße verstärkt werden. Für rauscharme Signale ist man bestrebt, die Verstärkung möglichst klein zu wählen (Eigenrauschen des Verstärkers!). Aus diesem Grunde ist der erfindungsgemäße Druckwellensensor bzw. dessen Anordnung zum anregenden Laserstrahl besonders geeignet, da er ein möglichst hohes Spannungssignal mit minimalem Rauschen liefert.

Bei der laserinduzierten Photoakustik-Spektroskopie werden im allgemeinen Druckwellensensoren bestehend aus piezoelektrischen Keramiken (PZT-Detektoren) verwendet. Bei kurzzeitiger mechanischer Belastung führen diese PZT-Detektoren eine gedämpfte Schwingung in der von ihrer Geometrie abhängigen Eigenfrequenz aus. Im Falle des Druckwellensensors für das LPAS-Spektrometer ist nun das aus Gründen der Abschirmung gegen elektromagnetische Störungen und zur besseren Handhabung erforderliche Metallgehäuse samt Einbauteilen so beschaffen, daß der PZT-Detektor ungehindert in seiner Resonanzfrequenz (Grundschwingung ohne Anregung von Obermoden unter Vermeidung von Phasensprüngen) ausschwingen kann. Nur bei diesem Verhalten sind die beim Spektrometer detektierten zeitabhängigen Spannungssignale leicht interpretierbar.

Zur Schallübertragung der in der Meßprobe erzeugten Druckwelle auf den PZT-Detektor ist es erforderlich, daß dieser mechanisch an die Meßprobe angekoppelt wird. Eine besondere Bedeutung kommt hier der Reproduzierbarkeit der Schallübertragung zu. Deshalb erfolgt diese Ankopplung auch nach einem Wechsel der Meßprobe stets in gleicher Weise, d.h. mit der gleichen Güte.

Die Erfindung wird im folgenden anhand eines Ausführungsbeispiels mit Hilfe der Figuren näher erläutert. Dabei zeigt die Fig. 1 eine Explosionszeichnung des Sensors, die Fig. 2 den zusammengebauten Sensor, die Fig. 3 eine Vergrößerung des Membranbereichs und die Fig. 4 diesen Bereich, wie er an einer Messzelle anliegt.

Für den nachfolgend beschriebenen Druckwellensensor wurde Zylindergeometrie zugrunde gelegt. Hierbei erfolgt die Anregung des piezoelektrischen Detektors in achsialer Richtung. Bei einer Absorptionslänge von 10 mm, d. h. für Standard-Probenküvetten mit 10 x 10 mm Grundfläche (Innenmaß) erhält man die beste Abtastung der Druckwelle mit einem Piezodetektor mit 10 mm Durchmesser. Für zunehmende Detektordikke steigt dessen Empfindlichkeit, die Schwingungseigenschaften werden aufgrund der steigenden Dämpfung jedoch schlechter. Optimierungsversuche haben gezeigt, daß ein Detektor mit 5 mm Dicke das größte Spannungssignal bei noch interpretierbaren Schwingungseigenschaften liefert. Bei kurzzeitiger Anregung (ca. 5 ns) schwingt dieser Detektor mit seiner Resonanzfrequenz von 200 kHz aus. Die Spannungsverstärkung des Piezosignals erfolgt mit einem externen 20/40 dB Low-Noise-Verstärker.

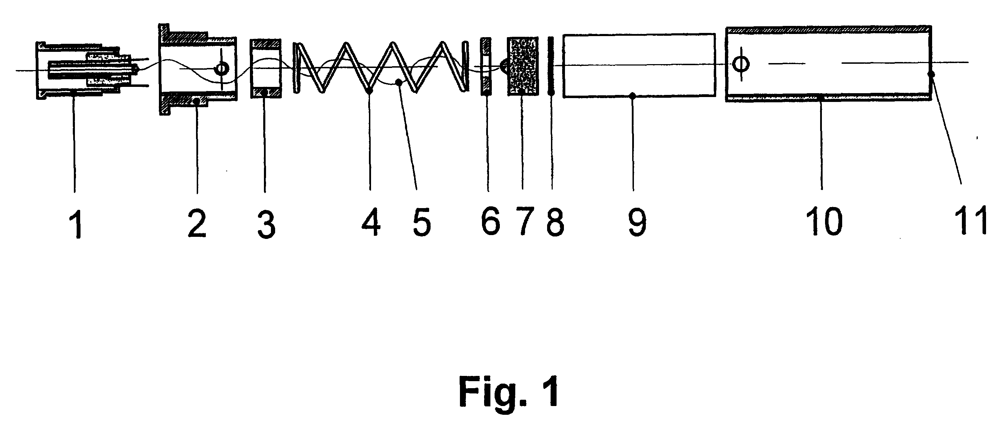

Fig. 1 zeigt den Aufbau des Druckwellensensors. Die Koachsial-buchse 1 zum Abgreifen der Piezospannung wird in dem Gehäuseendteil 2 befestigt. Der Distanzring 3 aus nicht leitfähigem Material dient der Isolation zwischen Feder 4 und Gehäuseendteil 2 und als Gegenlager für die Feder 4. Über den isolierten Draht 5 wird der Kontakt zwischen einer Seite des Piezodetektors und dem Innenleiter der Koachsialbuchse hergestellt. Die Isolationsscheibe 6 dient als zweites Gegenlager der Feder 4.

Als Piezodetektor 7 wird ein Blei-Zirkonat-Titanat Detektor mit Nickel-Elektroden verwendet.

Die Isolationsmantelfolie (Polyäthylen) 9 dient zur Isolation der Einbauten gegen das Gehäuse 10 (Mantelrohr) und als Führung. Der Massekontakt des Piezodetektors wird über das Gehäuse hergestellt. Das Gehäuseendteil 2 und das Gehäuse 2, 10, 11 sind zweckmäßigerweise miteinander verschraubt.

Der Piezodetektor 7 wird mit der Spiralfeder 4 an die dünne Schwingungsmembran 11 aus Edelstahl angepreßt. Sie ist für den ausschließlich in seiner Resonanzfrequenz schwingenden Sensor von zentraler Bedeutung. Untersuchungen haben gezeigt, daß der Druckwellensensor nur dann die geforderten Eigenschaften zeigt, wenn die Dicke der Schwingungsmembran << Gehäusewandstärke ist. Im hier beschriebenen Fall wird eine 15 - 45 µm dicke, beidseitig polierte Edelstahlfolie als Schwingungsmembran 11 verwendet. Die Gehäusewandstärke beträgt 1 mm.

Für die optimale akustische Ankopplung des Sensors an die Meßprobe ist zwischen Schwingungsmembran 11 und Piezodetektor 7 eine ca. 0,4 mm dicke Scheibe 8 aus einem Weichmetall als Druckkissen, z. B. Indium (gewalzter Indium-Dichtdraht oder Indiumfolie) eingelegt. Im geschlossenen Sensorgehäuse preßt die genannte Spiralfeder 4 mit einer Kraft von ca. 20 N den Piezodetektor 7 über dieses Druckkissen 8 auf die am Edelstahlgehäuse 10 fixierte Schwingungsmembran 11. Das über die Fließgrenze belastete Druckkissen 8 paßt sich beidseitig den Oberflächenrauhigkeiten bzw. den Abweichungen von der Planarität der Flächen an. Aufgrund der elastisch-/plastischen Verformung wird die Schwingungsmembran 11 ca. 0,1 - 0,8 mm über den Rand des Edelstahlgehäuses 10 herausgedrückt, wobei die Kontaktfläche zwischen Piezodetektor und Membran auch ohne die sonst üblichen Kontaktmittel (z. B. Glyzerin) frei von schwingungsdämpfenden Lufteinschlüssen ist.

Der Druckwellensensor wird zur besseren Ankopplung als ganze Einheit mit einer zweiten Spiralfeder (hier nicht dargestellt, Federkraft ca. 20 N) gegen die parallel zur Membranoberfläche positionierte Küvette 13 mit der Probe 14 gedrückt. Dabei muß der Anpreßdruck so groß sein, daß die mit der Innenfeder 4 verursachte Herauswölbung der Schwingungsmembran 11 weitestgehend aufgehoben wird. Die gegenläufigen Federkräfte bewirken eine sich innerhalb kurzer Zeit einstellende Optimierung der akustischen Ankopplung des Piezodetektors 7 an die Küvette 13. Weiterhin werden die zu messenden Achsialschwingungen durch die resultierende ringförmige Entspannung der Schwingungsmembran 11 begünstigt.

Für die Fixierung einer als Schwingungsmembran 11 geeigneten Edelstahlfolie am dünnwandigen Edelstahl-Sensorgehäuse mußte ein geeignetes Lötverfahren entwickelt werden. Dabei war es erforderlich, daß eine mechanisch dauerhafte (hohe Federkräfte, insbesondere bei einseitiger Belastung!) und elektrisch leitende Verbindung zwischen Schwingungsmembran 11 und dem Mantelrohr 10 (Wandstärke 1 mm) hergestellt wird. Bei diesem Lötverfahren darf insbesondere kein Lötmittel an der Innenfläche des Mantelrohrs austreten, da sonst die Schwingungsfähigkeit der Membran behindert wird.

Die Fixierung erfolgt durch Weichlöten in einem vorgeheizten Laborofen. Hierzu wird eine geeignete Spannvorrichtung und ein drahtförmiges Edelstahl-Weichlot mit Flußmittel verwendet. Gut geeignet ist z. B. das VA-Weichlot nach DIN 8505 der Firma Duratrode (Dreieichstr. 6, Möhrfelden-Walldorf) vom Typ Dura-Solder HS, DT 5311 - 116 mit 1,6 mm Durchmesser und darin enthaltenem Flußmittel. Es hat einen Schmelzpunkt von 221° C.

Die Spannvorrichtung besteht aus einer gut wärmeleitenden Messing-Basisplatte auf die die aufzulötende, zunächst im Übermaß viereckige VA-Folie 11 aufgelegt wird. Ein über einen feststellbaren Rundstab nach hinten abgestütztes Spannelement hält mit einer Spannschraube das zylindrische Gehäuse 10 des Sensorgehäuses auf der festzulötenden VA-Folie 11. An der Lötstelle darf die Innenfläche des Mantelrohrs nicht angefast werden, da sonst beim Lötvorgang Lot an der Innenfläche hochsteigt! Dagegen sollte die äußere Mantelfläche leicht angefast werden (Fase ca. 0,1 mm x 45°). Die gesamte Spannvorrichtung steht auf einer dikken Metallplatte für die Wärmespeicherung (Wärmespeicherplatte). Ihre Wärmekapazität muß sehr viel größer sein, als die der Basisplatte. Das erfüllt beispielsweise eine 10 mm dicke Messingplatte in den Abmessungen 65 x 75 mm.

Für den Lötvorgang muß der Weichlot-Draht 12 mit 1,6 mm Durchmesser auf einen Querschnitt von ca. 1 x 2 mm flachgedrückt, in Segmente zerteilt und ringförmig auf der VA-Folie 11 um das mit der Spannvorrichtung eingespannte Mantelrohr 10 angeordnet werden. Es hat sich gezeigt, daß mit einer Anordnung von 6 Ringsegmenten im Abstand von ca. 1 mm zueinander bzw. zum Mantelrohr gute Lötergebnisse erzielt werden.

Für den eigentlichen Lötvorgang wird ein auf mindestens 400° C aufheizbarer Laborofen mit entsprechend leicht zugänglichem Probenraum benötigt. Im vorliegenden Fall wird der Ofen mit der Wärmespeicherplatte in ca. 30 Minuten auf 395° C aufgeheizt. Nach Erreichen dieser Endtemperatur wird die Spannvorrichtung mit Werkstücken und dem präparierten Weichlot im Ofen auf die Wärmespeicherplatte gestellt und der Ofen verschlossen. Über die Kapillarwirkung des Spalts zwischen VA-Folie 11 und Edelstahlgehäuse 10, der durch Oberflächenrauhigkeiten gegeben ist dringt das Weichlot 12 ein. Nach ca. 2 Minuten ist der Lötvorgang beendet und die Spannvorrichtung mit dem Werkstück muß für ein gutes Lötergebnis entnommen werden. Nach Abkühlung an Luft wird das Werkstück aus der Spannvorrichtung gelöst und die überstehende VA-Folie 11 abgedreht.

Im folgenden werden Toleranzbereiche für einige Parameter angegeben:

Piezogeometrie (Piezokeramik):

Zylindergeometrie

Durchmesser:

Für maximale Meßempfindlichkeit und minimale Empfindlichkeit für Störsignale muß der Durchmesser der Piezokeramik der Geometrie der Meßprobe angepaßt sein. Deshalb wurde im beschriebenen Fall, bei einer Meßküvette mit 1 cm Absorptionslänge eine Piezokeramik mit 10 mm Durchmesser gewählt. Für Meßproben (Küvetten) mit anderen Absorptionslängen ist der Durchmesser entsprechend zu ändern.

Dicke:

Es wurde für einen gegebenen Durchmesser von 10 mm die Piezodicke in Vorversuchen optimiert. Aufgrund dieser Optimierung wird für Küvetten mit 1 cm Absorptionslänge eine Piezodicke von 5 mm gewählt. Die Dicke kann zwischen 2 und 15 mm variiert werden.

Gehäusegeometrie:

Zylindergeometrie

Innendurchmesser:

Der Innendurchmesser ergibt sich aus dem Durchmesser der Piezokeramik + 2 Mal Dicke der Isolations-Mantelfolie + Toleranz für Montage bzw. ungehinderte Bewegung der mit der Spiralfeder abgestützten Einbauten.

Wandstärke der Mantelfläche:

Aus Gewichts- und Festigkeitsgründen wurde eine Wandstärke von 1 mm gewählt. Die Wandstärke der Mantelfläche ist für die Funktion des Sensors nur von untergeordneter Bedeutung.

Länge:

Die Länge ergibt sich aus den Abmessungen der Einbauten und den mechanischen Kenndaten der Spiralfeder. Im vorliegenden Fall wurde eine Länge von 35 mm gewählt (Federkraft im Gehäuse ca. 20 N). Vermutlich können Längen von 30 bis 50 mm gewählt werden (... wodurch sich die Federkraft entsprechend ändert), ohne die Funktionsfähigkeit des Sensors zu beeinträchtigen. Voraussetzung hierfür ist allerdings, daß die Federkraft der Außenfeder entsprechend angepaßt wird (Federkraft innen = ca. Federkraft außen).

Schwingungsmembran 11 (Dicke des Zylinderbodens):

Zur Abschirmung elektromagnetischer Einstrahlung ist ein allseitig umschlossenes metallisches Gehäuse, d. h. ein metallischer Zylinderboden erforderlich.

Nach dem Stand der Technik wurden bisher zylindrische Gehäuse mit Boden als ein Drehteil hergestellt. Für die Schwingungsübertragung hatte dies neben der ungenügenden Oberflächengüte (insbesondere Innenboden) zur Folge, daß der Zylinderboden fertigungstechnisch minimal 1 mm dick sein konnte (schlechte Schingungsübertragung, Obermoden). Deshalb wurden zunächst als Boden polierte VA-Scheiben verwendet, die mit Laserstrahl an Boden polierte VA-Scheiben verwendet, die mit Laserstrahl an den Zylindermantel angeschweißt waren. Die Scheibendicke betrug 500 μm. Eine Reduzierung der Scheibendicke auf 300 μm bewirkte keine wesentliche Meßsignal-Verbesserung. Erst die Verwendung einer fest mit dem Zylindermantel verbundenen 25 μm dicken VA-Folie ergab die deutlich besseren Signaleigenschaften des Schwingungssensors. Bei Verwendung noch dünnerer VA-Folie wird es voraussichtlich Probleme mit der mechanischen Festigkeit geben (Kraft der Innenfeder!).

Die Verbindung der Folie mit dem Mantel muß elektrisch leitend sein. Es ist unerheblich ob die Folie aufgeklebt, geschweißt oder gelötet wird. Nach dem Test mehrer Verfahren (Laserstrahl-Schweißen, Kleben, Löten) hat sich eindeutig das oben beschriebene Lötverfahren als am besten (für diese Geometrie, d.h. Wandstärke 1 mm) geeignet erwiesen.

Werkstoff:

Aufgrund seiner chemischen Beständigkeit, der einfachen Verarbeitbarkeit und der Verfügbarkeit polierter dünner Folien wurde Edelstahl als Werkstoff für das Sensorgehäuse 10 verwendet. Prinzipiell können auch andere elektrisch leitende metallische Werkstoffe verwendet werden.

Weichmetall-Druckkissen:

Zylindergeometrie

Durchmesser:

Für eine optimale akustische Ankopplung muß der Durchmesser des Weichmetall-Druckkissens dem der Piezokeramik entsprechen.

Dicke:

Die Dicke der eingesetzten Scheiben betrug ca. 400 μm. Dies sollte jedoch kein kritisches Maß sein, da sich diese Dicke aus Fertigungsgründen ergab (einfache Herstellung der Scheiben aus In-Draht) und größere Toleranzen keinen Einfluß auf die Signalempfindlichkeit hatten. Wahrscheinlich können bei Goodfellow erhältliche In-Folien im Dicken-Bereich 10 μm bis ca. 1 mm verwendet werden (Nachteil: sehr teuer!). Die Minimaldicke sollte keinesfalls unter der Summe der Oberflächenrauhigkeiten von Piezodetektor und Schwingungsmembran sein.

Werkstoff:

Der als Druckkissen zu verwendende Werkstoff muß ähnliche mechanische Eigenschaften wie Indium haben (Weichmetall). Insbesondere sollten Härte, ("Plastizität"), Druck- und Zugfestigkeit annähernd gleich sein. Für Indium liegt die Brinellhärte im Bereich 0,9 bis 1,2 , die Zugfestigkeit bei 260 - 750 $N/cm^2$ und die Druckfestigkeit bei 220 $N/cm^2$. Im Photoakustikaufbau wird das Druckkissen mit einer Kraft von ca. 2 x 20 N, d. h. einem Druck von ca. 50 $N/cm^2$ belastet.

Bei Verwendung von Piezodetektoren, bei denen der dem Druckkissen zugewandte elektrische Kontakt (Massekontakt) auf die gegenüberliegende Seite geführt ist (2 Lötstellen auf einer Seite), muß der Werkstoff nicht zwingend elektrisch leitend sein. Im Gegensatz hierzu muß bei dem in der Erfindungsmeldung genannten Piezotyp für einen guten Massekontakt die Leitfähigkeit hinreichend groß sein.

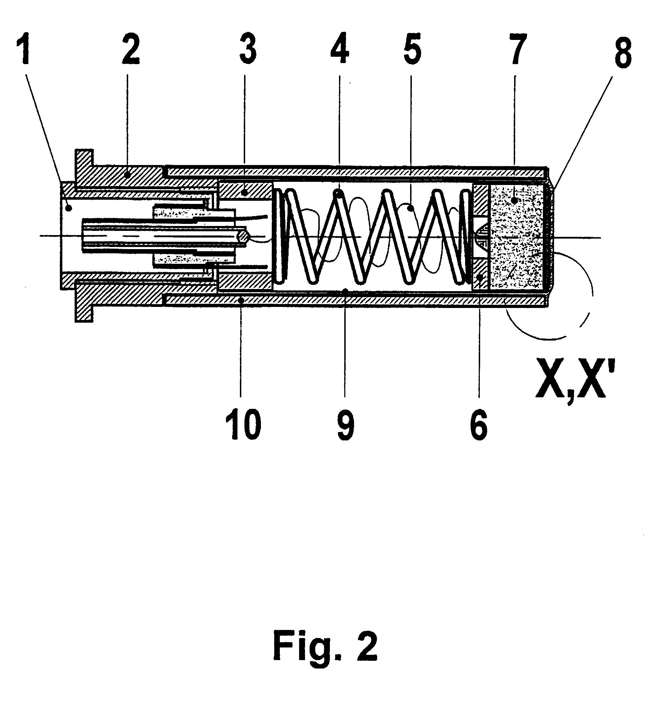

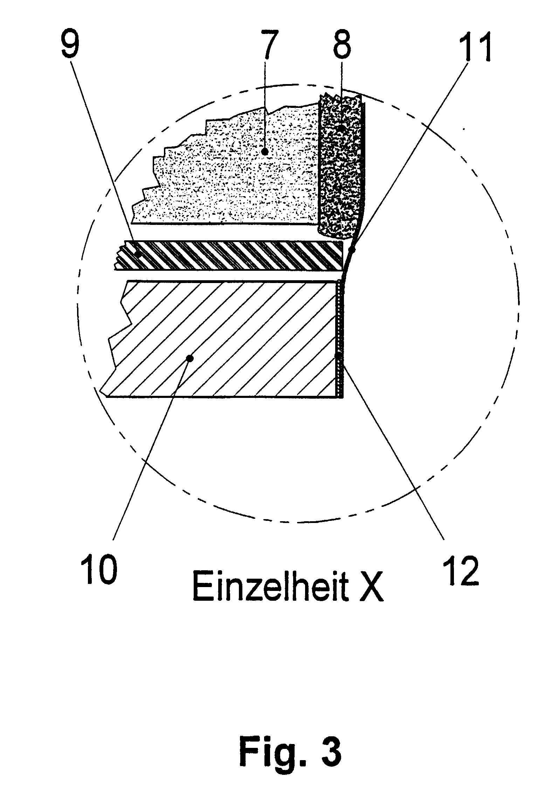

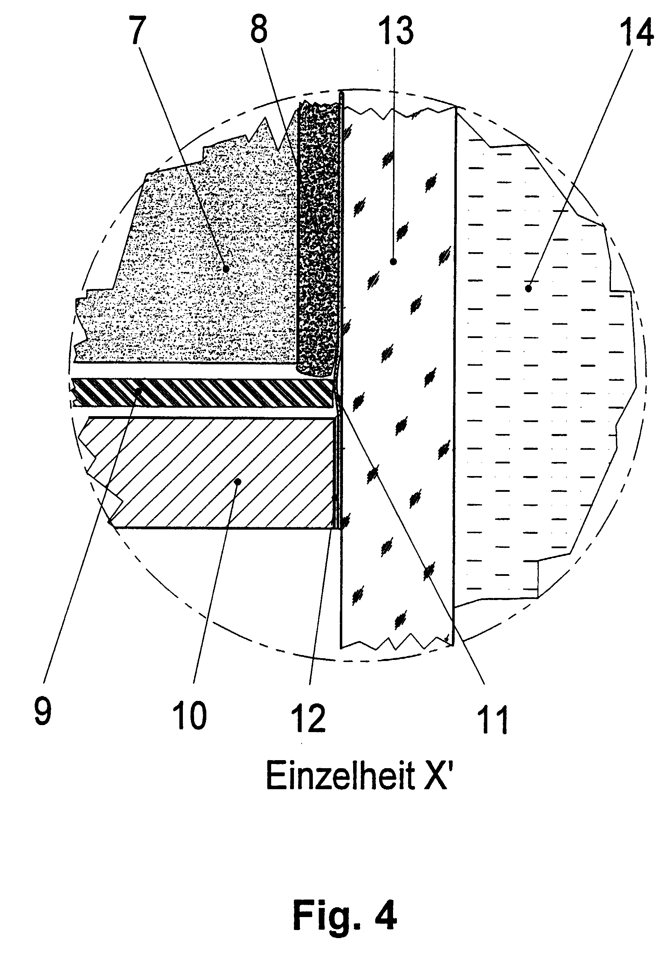

Die Fig. 2 zeigt den zusammengebauten Druckwellensensor, wobei der Abbildungsmaßstab zur besseren Darstellung der Schwingungsmembran 11 vergrößert ist. Rechts unten ist ein Ausschnitt X, X' angedeutet, der in den Figuren 3 und 4 nochmals weiter vergrößert dargestellt ist.

Die Fig. 3 zeigt den Ausschnitt des Druckwellensensors ( Einzelheit X) ohne Probenküvette. Durch die Kraft der Feder 4 wird die Schwingungsmembran 11 über den Piezodetektor 7 und das Druckkissen 8 nach außen gedrückt. Zwischen der Schwingungsmembran 11 und der Stirnfläche des Edelstahlgehäuses 10 ist als Verbindung eine Schicht (Scheibe) aus Weichmetall dargestellt.

Die Fig. 4 zeigt den Ausschnitt des Druckwellensensors (Einzelheit X'), wobei der Sensor mit Hilfe der weiteren Feder gegen das Fenster 13 einer Probenküvette gedrückt ist. Die Membran 11 ist nicht mehr ausgebeult, das Gehäuse 10 ist mechanisch weitgehend vom Piezodetektor 7 entkoppelt. Rechts vom Fenster 13 befindet sich die Probe 14, die untersucht werden soll.

Bezugszeichenliste:

1 Koachsial-Buchse
2 Gehäuse-Endteil, Edelstahl
3 Distanzring, Teflon
4 Spiralfeder
5 isolierter Cu-Draht, verlötet zwischen Piezo-Detektor und Koachsial-Buchse
6 Isolationsscheibe, Teflon
7 Piezoelektrisches Element als Detektor
8 Druckkissen, Indium
9 Isolations-Mantelfolie, Polyäthylen
10 Gehäuse (Edelstahl)
11 Schwingungsmembran
12 Weichlot
13 Fenster einer Probenküvette
14 Probe

**Patentansprüche**

1. Druckwellensensor bestehend aus einem piezoelektrischen Element, welches in einem zylindrischen Gehäuse gehaltert ist, wobei das piezoelektrische Element mit Hilfe einer Feder gegen eine Stirnfläche des Gehäuses gedrückt wird, wobei die Stirnfläche aus mindestens zwei Schichten besteht, dadurch gekennzeichnet, daß die Stirnseite des Gehäuses aus einer Metallfolie (11) besteht und daß sich zwischen der Metallfolie (11) und dem piezoelektrischen Element (7) ein Druckkissen (8) aus Weichmetall befindet, wobei das Druckkissen (8) durch die Feder (4) über die Fließgrenze belastet wird.

2. Druckwellensensor nach Anspruch 1, dadurch gekennzeichnet, daß die Metallfolie (11) zwischen 5 und 300 μm dick ist.

3. Druckwellensensor nach Anspruch 1 oder 2, dadurch gekennzeichnet, daß das Druckkissen (8) aus Weichmetall zwischen 10 und 1000 μm dick ist.

4. Druckwellensensor nach einem der Ansprüche 1 bis 3, dadurch gekennzeichnet, daß die Metallfolie (11) aus Edelstahl ist.

5. Druckwellensensor nach einem der Ansprüche 1 bis 4, dadurch gekennzeichnet, daß das Weichmetall Indium ist.

6. Verwendung des Druckwellensensors gemäß einem der Ansprüche 1 bis 5 als Detektor für die laserinduzierte Photoakustik-Spektroskopie.

**Claims**

1. Pressure wave sensor, comprising a piezoelectric element, which is retained in a cylindrical housing, wherein the piezoelectric element is pressed by means of a spring towards an end face of the housing, wherein the end face comprises at least two layers, characterised in that the end face of the housing is formed from a metal foil (11), and in that a pressure pad (8), formed from soft metal, is situated between the metal foil (11) and the piezoelectrc element (7), the pressure pad (8) being loaded by the spring (4) above the flow limit.

2. Pressure wave sensor according to claim 1, characterised in that the metal foil (11) has a thickness of between 5 and 300 μm.

3. Pressure wave sensor according to claim 1 or 2, characterised in that the pressure pad (8) is formed from soft metal with a thickness of between 10 and 1000 μm.

4. Pressure wave sensor according to one of claims 1 to 3, characterised in that the metal foil (11) is formed from stainless steel.

5. Pressure wave sensor according to one of claims 1 to 4, characterised in that the soft metal is indium.

6. Use of the pressure wave sensor according to one of claims 1 to 5 as a detector for the laser-induced photoacoustic spectroscopy.

**Revendications**

1. Capteur d'ondes de pression composé d'un élément piézo-électrique logé dans un boîtier cylindrique, cet élément piézo-électrique étant pressé par un ressort contre une surface frontale du boîtier, la surface frontale étant formée d'au moins deux couches, caractérisé en ce que

• la surface frontale du boîtier est formée d'une feuille métallique (11) et,
• entre la feuille métallique (11) et l'élément piézo-électrique (7) se trouve un coussin de pression (8) en métal mou, le coussin de pression (8) étant chargé par le ressort (4) au-delà de la limite de fluage.

2. Capteur d'ondes de pression selon la revendication 1, caractérisé en ce que la feuille métallique (11) a une épaisseur comprise entre 5 et 300 μm.

3. Capteur d'ondes de pression selon l'une quelconque des revendications 1 et 2,
   caractérisé en ce que
   le capteur de pression (8) est en métal mou d'une épaisseur comprise entre 10 et 100 μm.

4. Capteur d'ondes de pression selon l'une des revendications 1 à 3,
   caractérisé en ce que
   la feuille métallique (11) est en acier inoxydable.

5. Capteur d'ondes de pression selon l'une des revendications 1 à 4,
   caractérisé en ce que
   le métal mou est de l'indium.

6. Application du capteur d'ondes de pression selon l'une quelconque des revendications 1 à 5, comme détecteur de spectroscopie photo-acoustique à induction laser.

Fig. 1

**Fig. 2**

Einzelheit X

## Fig. 3

Einzelheit X'

Fig. 4